# EUROPEAN PATENT APPLICATION

(11) **EP 3 915 823 A1**
(43) Date of publication of application: **01.12.2021**
(21) Application number: 20176830.6
(22) Date of filing: 27.05.2020
(51) Int. Cl.: B60L 13/00, B60L 53/12, B65G 47/96

(54) **SYSTEM FOR TRANSMITTING ELECTRIC ENERGY TO A VEHICLE OVER THE AIR**

(71) Applicant: Fast Man Service, 20158 Milano (IT)
(72) Inventor: COCCETTI, Silvano, 20158 Milano (IT); SORICE, Dario, 20158 Milano (IT)
(74) Representative: De Ros, Alberto

(57) **Abstract**

System (1000) for transmitting electrical energy to a vehicle (2000) over the air, adapted to make a movement on a rail (110) by effect of a handling system (5000), comprising a fixed part (100) bound to the ground and a movable part (200) connected to the vehicle (2000). The fixed part (100) induces an electromotive force in the movable part (200) by effect of the movement of the vehicle (2000) on the rail (110) and the resulting electric energy is stored (280) in the vehicle (2000) for a first interval of time and then supplied to an electric actuator (150) of the vehicle (2000) for a second time interval.

## Description

### FIELD OF THE INVENTION

The present invention relates to a system for transmitting electric energy over the air (it can also be called "wireless") to a vehicle, a vehicle adapted to for receive electric energy and an automatic handling system for articles for industrial use.

### STATE OF THE ART

The handling systems for the automatic sorting of articles for industrial use, commonly called "sorters", are becoming increasingly important thanks to the continuous growth of the e-commerce sector. Said systems are necessary for sorting the goods, ensuring high productivity and maximizing the efficiency of order fulfilment.

The handling systems for automatic sorting typically consist of a movable part, in particular a train of trolleys, which slides on one or more rails (often two rails forming a track) bound to the ground. Each of the trolleys of the train therefore moves along the path defined by the rails of the system and said path is often closed.

In particular, the systems of this type provide for trolleys that transport articles to be handled and sorted by unloading them subsequently in different positions based on the destination of the article and/or to certain characteristics of the article, for example the type and/or the weight and/or the size.

The trolleys are therefore provided with a system for unloading (and possibly also loading) goods capable of unloading (and possibly loading) the contents of the trolley into special containers typically located on the external and/or internal side of the path of the rails and intended for collecting the unloaded articles.

Such an unloading system is present on a trolley and is typically operated by a special electric motor activated by signals transmitted by a control unit of the handling system and received and processed by an electronic unit of the trolley (it is therefore a computed management).

The control unit notices the position of a trolley on the path with respect to the fixed position of the containers on the rail, activates the motor of the trolley unloading system when the trolley is at the appropriate container. Unloading occurs while the trolley is moving and therefore must take place in a short time. Consequently, for the activation of the unloading system, the electric motor requires a high instantaneous electric power.

The electric energy required to power the electric motor (and the electronic unit of the trolley) is supplied today essentially in three main ways, each of which has limits and contraindications as regards electrical efficiency, consumption, mechanical stability, maintenance, installation and management costs, and system reliability and safety.

According to a first method, transmission of electric energy to the trolley is made by means of sliding contacts.

Said solution is poorly reliable and consequently requires frequent maintenance and replacement of the contacts. Furthermore, the sliding contacts are characterized by a high level of pollution of the place of use due to the dust released during their operation, caused by the consumption of material due to the sliding frictions of the system.

According to a second method, electric energy is generated by one or more alternators associated with the wheels of the trolley.

Said solution is also characterized by important wear and tear problems which cause a gradual loss of contact between rails and trolleys, giving rise to hops of the wheels of the trolleys along the path.

According to a third method, transmission of electric energy to the trolley is made by means of a "U" or fork element fixed to the trolley which picks up energy emitted by cables positioned near the rails and crossed by high alternating current. Said cables generate a strong electromagnetic radiation throughout their extension while their use is limited only near the "U" or fork element making the system not only not very efficient, but also dangerous due to environmental pollution of the electromagnetic type that the system produces and which makes it for example incompatible with the presence of people with pacemakers in its vicinity.

### ABSTRACT

The general object of the present invention is to improve the known art.

This general object as well as other more specific objects are achieved thanks to the solutions which are the subject of the appended claims which form an integral part of the present description.

### LIST OF FIGURES

The present invention shall become more readily apparent from the detailed description that follows to be considered together with the accompanying drawings in which:
Fig. 1 shows a possible (simplified) embodiment of a system for transmitting electric energy to a vehicle over the air according to the present invention,
Fig. 2 shows a cross section of the embodiment of Fig.1,
Fig. 3 shows a block diagram (simplified) of an example of embodiment of the movable part of the system of Fig. 1 and of the control means,
Fig. 4 shows an example of embodiment of a vehicle adapted to receive electric energy according to the present invention, and
Fig. 5 shows an example of magnetic interaction between the fixed part and the movable part in the system of Fig. 1.

As can be easily understood, there are various ways of practically implementing the present invention which is defined in its main advantageous aspects in the appended claims and is not limited either to the following detailed description or to the appended claims.

### DETAILED DESCRIPTION

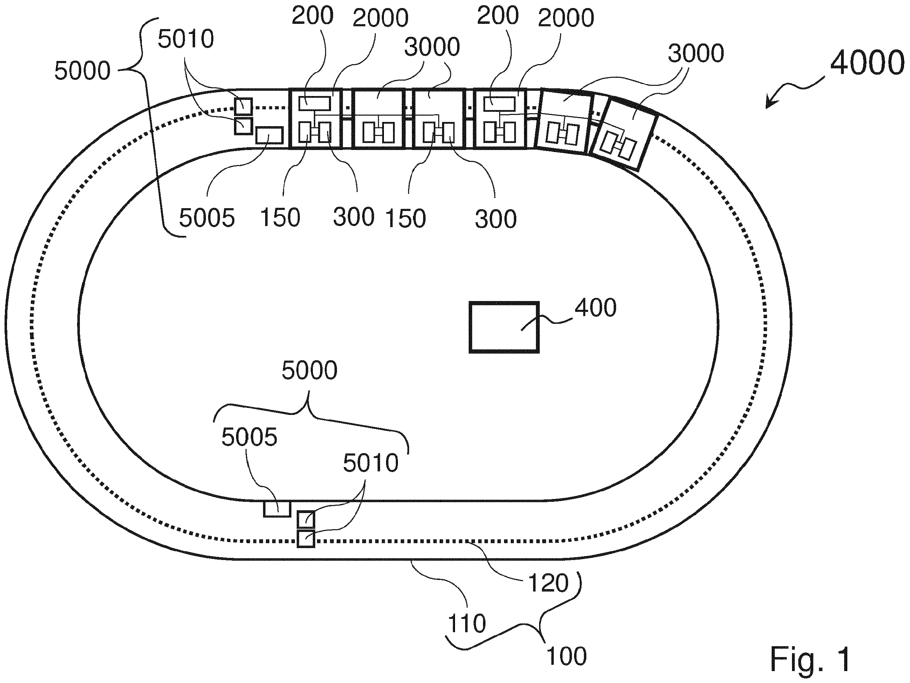

With reference to Fig. 1, the system 4000 contains means adapted to transmit electric energy over the air (it can also be called "wireless") to at least one vehicle 2000 moving on a rail 110 (typically the rails are two, as shown in Fig. 1, and form a track), in particular arranged along a closed path and lying on a horizontal plane, by effect of a handling system 5000. In particular, the 4000 system can be an automatic handling system for articles for industrial use, for example a "sorter", in other words a selecting and sorting system used in the logistic chain.

More generally, the system can transmit electric energy over the air to a vehicle moving on a rail arranged along an open path, for example a straight path.

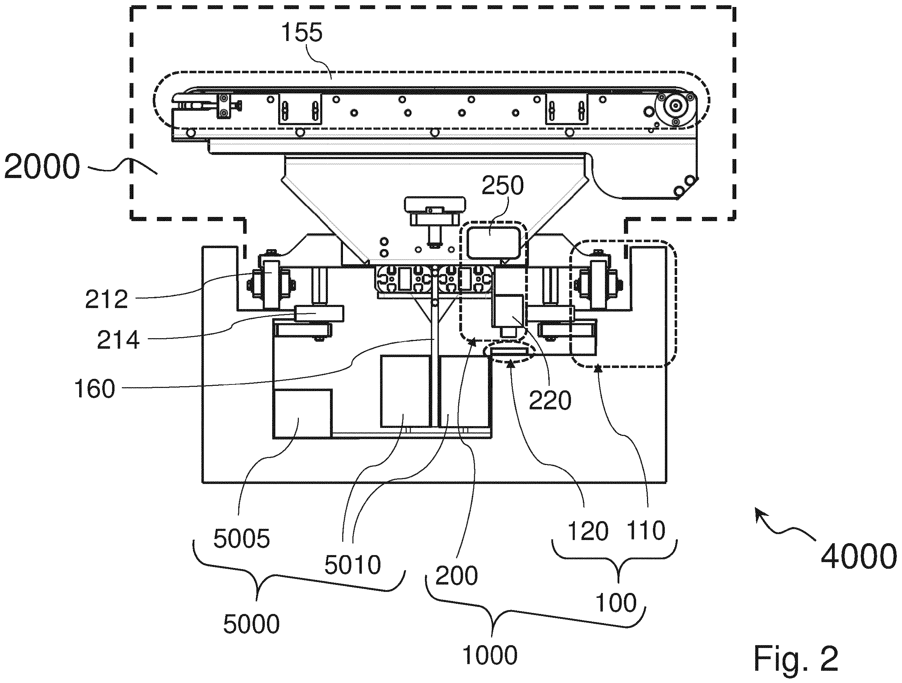

Said system (4000 in Fig. 1) comprises a rail (110 in Fig. 1), in particular a rail that develops along a closed path, and typically several vehicles (2000 and 3000 in Fig. 1), bound to the rail and adapted to handle articles. In particular, the vehicles are provided with at least one actuator (150 in Fig. 1), which controls for example a conveyor belt (155 in Fig. 2), adapted to sort the articles.

A handling system (the set of the elements 5005 and 5010 indicated as a whole with 5000 in Fig. 1) is adapted to make the vehicles move on the rail; said system typically acts both on the vehicles according to the present invention (2000 in Fig. 1) and on any other vehicles (3000 in Fig. 1). It should be noted that, for graphic reasons, in Fig. 1 the handling system is shown as if it were separate from the vehicles, but for the movement to take place there must be at least one vehicle at the handling system, so that at least one vehicle receives mechanical energy from the system and other vehicles are dragged by it.

An electric energy transmission system (the set of the elements 100 and 200 in Fig. 1) is adapted to transmit electric energy to at least one of the vehicles according to the present invention (2000 in Fig. 1) on the rail.

Fig. 2 shows, among other things, a simplified example of such a system for transmitting electrical energy which is indicated as a whole with 1000.

It should be noted that in Fig. 1 two vehicles 2000 according to the present invention are represented, by way of example and for simplicity of representation, mechanically bound to other vehicles 3000 (the difference between the vehicles 2000 and the vehicles 3000 will be explained below); the vehicles 2000 and the vehicles 3000 together form a "train" of vehicles.

The "train" of Fig. 1 is "short" and "open"; as previously said, the length of the train and the positioning of the handling system must be such that at least one vehicle is at the handling system for the train to receive mechanical energy from the system.

Alternatively and very typically according to the present invention, the train will be "closed" on itself, that is, it will consist of a number of vehicles so as to occupy the entire path of the rail.

The train of Fig. 1 comprises for example two vehicles 2000 according to the present invention; the minimum number of vehicles 2000 according to the present invention in the train is one; quite typically according to the present invention, a plurality of vehicles 2000 according to the present invention is present in the train and each of them will be bound to a small number, for example comprised between one and five, of other vehicles 3000.

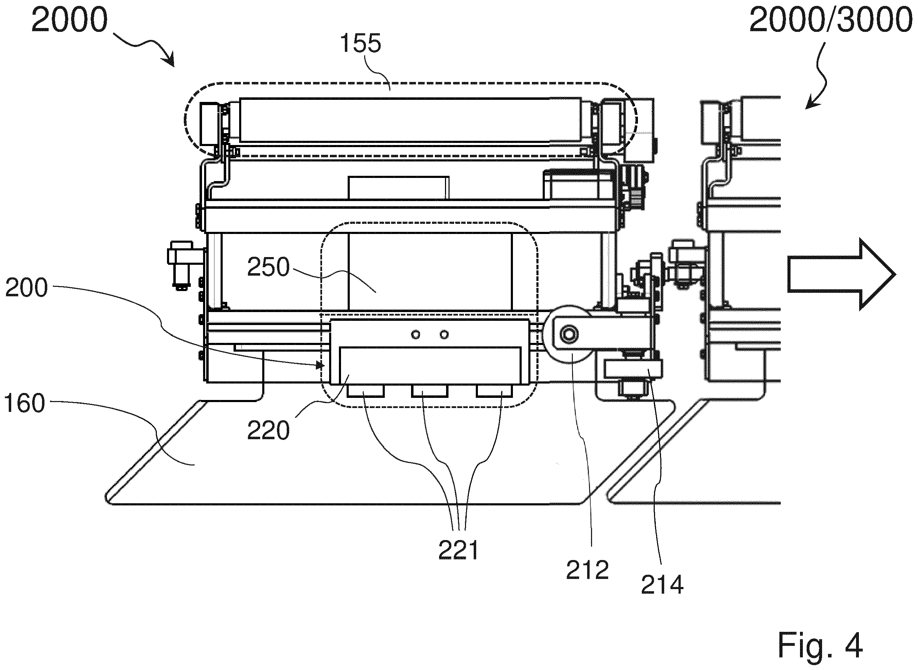

With reference to Figs. 1 and 2, according to a preferred embodiment, the vehicle 2000 is set in motion by one or more electric motors 5005 arranged along the path, each motor actuating a pair of rollers 5010 mirrored with respect to the centreline plane of the rail 110 and rotating around a rotation axis parallel to the centreline plane. A rigid fin 160 fixed under the vehicle 2000 (see Figs. 2 and 4) can pass between said rollers 5010, which fin, tightened by the two rotating rollers 5010, receives a thrust of the direction of rotation of the rollers 5010 and the overlying vehicle 2000 is also moved therewith. It should be noted that, typically, the vehicles 3000 will also be provided with a similar fin.

It should be noted that in Fig. 1 two electric motors 5005 and two pairs of rollers 5010 have been represented, but one or more electric motors 5005 and one or more pairs of rollers 5010 may be present in a variable number, for example on the basis of design specifications of the system.

Advantageously, the fin 160 of the vehicle 2000 can have a rhomboid shape (see Fig. 4) so that the discontinuity surface between the fin of a first vehicle 2000 and the fin of a second vehicle immediately following the first one is inclined with respect to the rotation axis of the rollers 5010, maximizing the fluidity of movement of both vehicles (it should be noted that the second vehicle can be of the type according to the present invention, i.e. 2000, or it can be another different vehicle, i.e. 3000).

In other words, during the passage from a first vehicle 2000 to a second vehicle in part the fin 160 of a first vehicle 2000 and in part the fin of a second vehicle partly slides between the rollers 5010.

Alternatively, the vehicle 2000 is set in motion, for example, by one or more magnetic induction motors by magnetic interaction between the magnetic poles located on the vehicle 2000 and one or more linear asynchronous motors fixed to the ground.

The vehicle 2000 is typically provided with wheels to bind the movement of the vehicle 2000 to the rail 110. In particular (see Fig. 2), the vehicle 2000 is provided with at least two support wheels 212, placed at the rail 110 (it is understood that in Fig. 2 there are wheels 212 that roll on a first rail and wheels 212 that roll on a second rail and the two rails can be joined together under the vehicle) and adapted to slide on it, and at least two stop wheels 214, placed orthogonally to the support wheels 212 and adapted to roll on one flank of the rail 110 (it is understood that in Fig. 2 there are wheels 214 that roll on a first rail and wheels 214 that roll on a second rail), in particular on internal flanks of the track formed by the pair of rails 110, favouring the impediment of movements of the vehicle 2000 along the transverse direction with respect to the direction of motion.

With particular reference to Fig. 2, the system 1000 comprises:
- a fixed part 100 bound to the ground and extending along at least part of the rail 110, and
- a movable part 200 bound to said vehicle 2000,
where, by effect of the movement of the vehicle 2000 on the rail 110, the fixed part 100 induces an electromotive force in the movable part 200 and the electric energy deriving from said induced electromotive force is stored at least temporarily in the movable part 200.

It should be noted that in Fig. 1 and Fig. 2 the fixed part 100 is generally indicated as the set of the elements 110 and 120 since said elements could be integrated to form a single component. However, as will be understood from the following, for the purposes of the transmission of electric energy the element 110, that is the rail, does not play any role.

It is also highlighted that in Fig. 2 the movable part 200 is indicated as the set of two subsystems 220 and 250; this will be explained below.

It should be noted that in Fig. 1 two vehicles 2000 have been represented on which the movable part 200 is present, but it is evident that the movable part 200 could be present on more vehicles of the trains in a variable number, for example it could be present on all the vehicles or on the half of the vehicles.

Advantageously, the movable part 200 is present on one fifth of the vehicles of the train, wherein a first vehicle 2000 is followed by (and coupled to) four other vehicles 3000 powered by the same movable part 200 present on the first vehicle 2000, and wherein the first vehicle 2000 is a vehicle according to the present invention and the other vehicle 3000 can be a vehicle according to the prior art, in which the movable part 200 for the transmission of energy is not present.

With reference to the example of Figs. 1 and 2, the fixed part 100 comprises a magnetic strip 120 which interacts with the movable part 200, the latter being in motion with respect to the fixed part 100. According to a preferred embodiment, the magnetic strip 120 is arranged in the area defined by the rail 110, in particular in one of the two areas defined by the centreline plane of the track formed by the pair of rails 110 so as not to interfere with the handling system 5000 of the vehicle 2000, in particular with the fin 160 and the pair of rollers 5010.

The magnetic strip 120 may comprise an alternation of permanent magnets or electromagnets with alternating polarity.

Advantageously, the magnetic strip 120 extends along the entire path of the rail 110.

Preferably, the magnetic strip 120 is constituted by a bar on which permanent magnets are fixed, for example glued or fitted, according to a predefined and constant pitch.

Advantageously, the permanent magnets are of the neodymium type, to ensure adequate energy transmission efficiency, and can be covered with a layer of antioxidant material, for example with an epoxy resin.

Advantageously, the magnetic strip 120 can be protected by a casing of material to protect it from possible damages deriving from accidental impacts.

With reference to Fig. 2, an electromagnetic group 220 is fixed or bound in the lower part of the vehicle 2000, in the area immediately above the magnetic strip 120 (the means for fixing the electromagnetic group 220 to the vehicle 2000 are not shown in the figure).

Typically, the electromagnetic group 220 is fixed to the vehicle 2000 so as to magnetically interact with the plurality of magnets fixed to the magnetic bar 120, for example and advantageously at a distance of 1-5 mm from the magnetic strip 120.

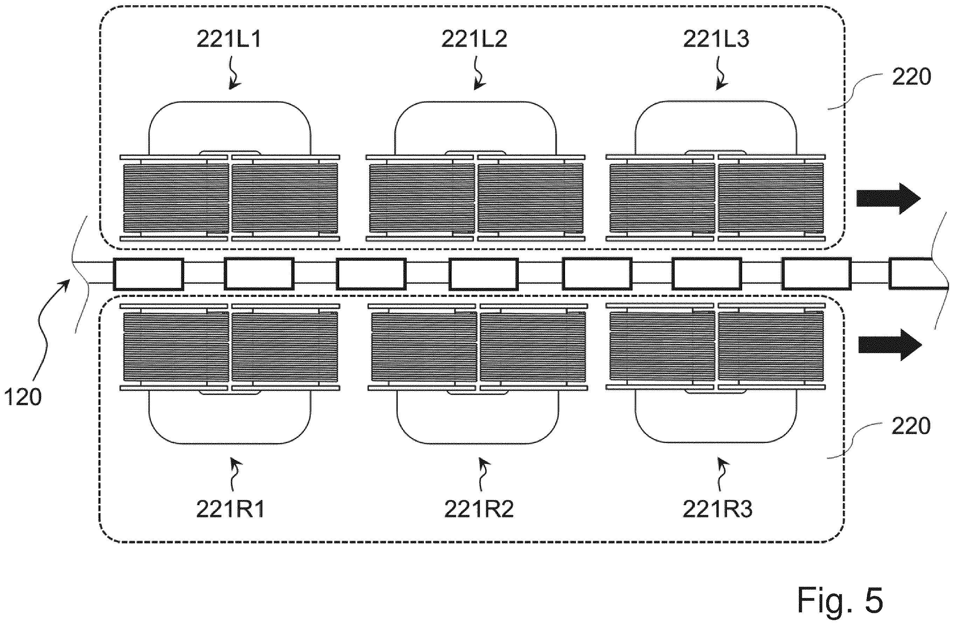

The electromagnetic group 220 comprises at least one solenoid with a magnetic core (see for example the elements 221 in Fig. 5, which are individually identified with 221L1, 221L2, 221L3, 221R1, 221R2, 221R3), in particular the magnetic core can be "U"- or "horseshoe"-shaped.

The electromagnetic group 220 is advantageously provided with at least three solenoids with a magnetic core 221 placed side by side along the direction of motion of the vehicle 2000, according to a predefined and constant pitch. The solution of Fig. 5 can be considered as a group formed by three pairs of solenoids or two groups each formed by three solenoids.

In a preferred embodiment, the pitch of each of the three solenoids with magnetic core 221 is equal to the pitch of the magnets of the magnetic strip 120. Furthermore, the mutual distance between the solenoids with magnetic core 221 is preferably such as to generate, at the terminals of the respective windings, three induced voltage signals with equal frequency, phase-shifted by 120°. Advantageously, the interaction between the magnetic strip 120 and the electromagnetic group 220 can be optimized according to the needs. For example, with reference to Fig. 2, the magnetic strip 120 can expose the magnets on the surface parallel to the plane in which the path of the rail 110 develops, ensuring, especially in the case of a curved path, greater stability of the vehicle 2000 due to the vertical attraction force that is generated between the magnetic strip 120 and the electromagnetic group 220. Alternatively, with reference to Fig. 5, the magnetic strip 120 can expose the magnets on the surface perpendicular to the plane in which the path of the rail 110 develops, so as to generate an opposed horizontal attraction force between the magnetic strip 120 and two electromagnetic groups 220 on the sides of the strip 120, useful for example in the case in which the vertical attraction force is an impediment for the operation of the system 1000.

Advantageously, the magnets of the magnetic strip 120 have alternating poles, i.e. a first magnet has the pole N on a first side of the strip and the pole S on a second side of the strip, a second magnet (adjacent to the first one) has the pole N on the second side of the strip and the pole S on the first side of the strip, a third magnet (adjacent to the second one) has the pole N on the first side of the strip and the pole S on the second side of the strip, and so on.

The electromagnetic group 220 of Fig. 5 is provided with at least three pairs of solenoids with magnetic core 221 placed side by side; the first pair corresponds to the solenoids 221L1 and 221R1, the second pair corresponds to the solenoids 221L2 and 221R2, the third pair corresponds to the solenoids 221L3 and 221R3. In particular, each pair of solenoids with moving magnetic core 221, in particular translating integrally with the electromagnetic group 220 and consequently with the vehicle 200, is arranged in such a way that a first electromagnet (for example, 221R1 or 221R2 or 221R3) is facing to a flank of the magnetic strip 120 (in particular the two outermost sections of the first solenoid are directed towards a first flank of the magnets of the magnetic strip 120) and a second solenoid (for example, 221L1 or 221L2 or 221L3) are facing to the opposite flank of the magnetic strip 120 (in particular the two outermost sections of the second solenoid are directed towards a second flank of the magnets of the magnetic strip 120), so that three solenoids with magnetic core 221 fixed/bound to the electromagnetic group 220 are facing on each flank of the strip.

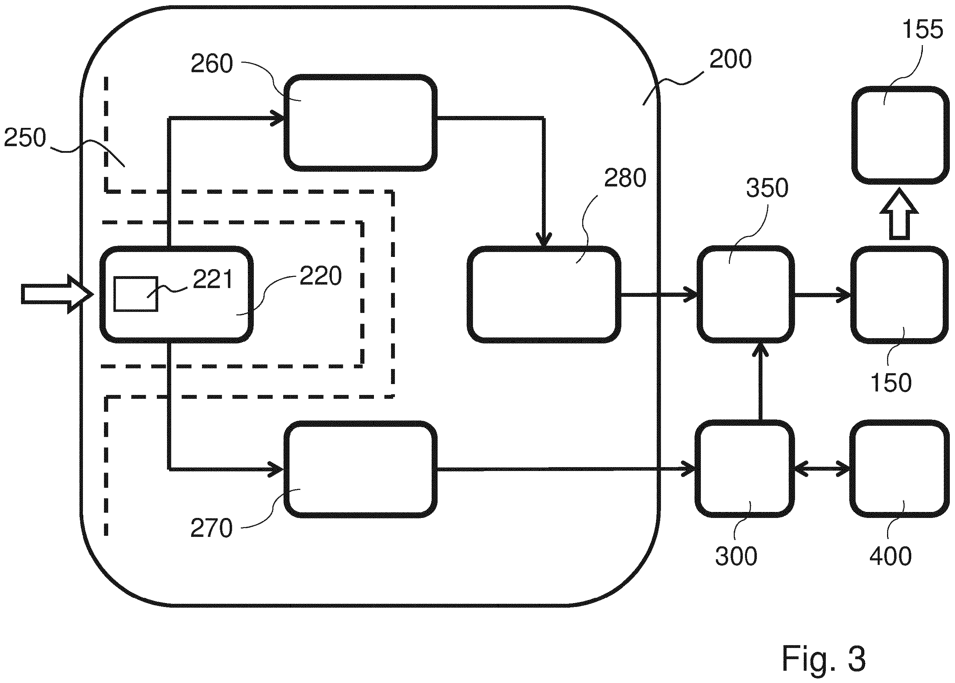

Once the vehicle 2000 is set in motion, an electromotive force is induced at the ends of each solenoid with a magnetic core, the intensity of which is proportional to the speed of the relative motion of the electromagnetic unit 220 (see for example Fig. 3) with respect to the magnetic track 120, according to the known Lorentz law.

Please refer now to the solution exemplified in figure 3.

The alternating voltage Vin thus generated by the electromagnetic group 220 is processed by an electronic module 260 typically consisting of: an AC/DC converter that generates a direct voltage starting from the three-phase signals of the electromagnetic group 220, a step-down DC/DC converter, a voltage stabilizer to guarantee a fixed voltage when the peaks of the three-phase signals of the electromagnetic group 220 vary, and a current limiter that avoids overloads of the electric energy when a maximum value of the charging current has been set.

The movable part 200 further comprises a supercapacitor 280 or an electric accumulator in which the electric energy at the output from the electronic module 260, in particular at the output from the current limiter, is stored. According to a preferred embodiment, a supercapacitor 280 of capacity, for example in the Farad order, is used.

The movable part 200, in particular the supercapacitor 280, is periodically adapted to store energy for a first interval of time and to supply stored energy for a second interval of time, wherein said first interval of time is typically greater, preferably much greater, than said second interval of time.

Typically, the first interval of time is 100-1000 seconds and the second interval of time is 0.1-10 seconds and therefore the ratio between said two intervals of times is 10-10000 but more typically 100-1000.

During the second interval of time the supercapacitor 280 supplies electric energy to at least one electric actuator 150 present on the vehicle 2000. Typically, the electric actuator 150 can be a motor that controls a conveyor belt or an arm of a robot. In a preferred embodiment, with reference to Fig. 2 and Fig. 4, the electric actuator 150 controls a conveyor belt 155 mounted in a transverse direction with respect to the direction of motion of the vehicle 2000 which, when actuated, can unload articles transported by the vehicle 2000 into special containers on the sides of the path of the rail 110, not shown in any figure.

It should be noted that, when other vehicles connected to the vehicle 2000 are present, the movable part 200 of the vehicle 2000, in particular the supercapacitor 280, can supply energy to electric actuators 150 placed on other consecutive vehicles.

With reference to Fig. 1, the vehicle 2000 is connected to other vehicles by means for mechanically and/or electrically connecting the vehicles to one another so as to form a "train" of vehicles. In particular, the vehicles can be mechanically connected to one another by means of tow hooks and/or electrically connected to one another by means of electric cables. In particular, it is noted in Fig.1 that the movable part 200 of the vehicle 2000 is electrically connected both to the electric actuator 150 of the vehicle 2000 and to two electric actuators 150 present on two other vehicles 3000. Based on the capacity of the supercapacitor 280, the movable part 200 of the vehicle 2000 can power both the electric actuator 150 of the vehicle 200 and one or more electric actuators 150 of one or more other vehicles 3000.

Typically, the system 1000 initially charges the supercapacitors 280 during the start-up phase of the system 1000, i.e. when the vehicle 2000 is moved from a zero speed (stationary vehicle) to a running speed (vehicle moving at a constant speed). In the case of rail 110 with closed path, the start-up phase can for example last from 1 to 3 complete turns of the vehicle 2000 on the rail 110.

Advantageously, the supercapacitors 280 further have the possibility of being charged through mains voltage, typically at 220 V, in such a way as to facilitate any possible and necessary maintenance activity with the stopped system.

Once the system 4000 is started and the electronic module 260 has charged the supercapacitor 280 up to a predetermined voltage value, the movable part 200 can stop storing energy and the braking effect of the counter-electromotive force induced by the magnets is reduced, for example until the next second interval of time in which the supercapacitor 280 supplies electric energy to one or more electric actuators 150 and the movable part 200 may need to start storing energy again to compensate for the energy that has been consumed.

According to an advantageous example of embodiment, the movable part further comprises a sensor (for example indicated with 270 in Fig. 3), in particular a magnetic sensor, adapted to determine the position of the vehicle on the rail.

With reference to Fig. 3, the sensor 270 can detect the magnetic pulses received when the electromagnetic group 220 of the movable part 200 of the system 1000 is located at each magnet of the magnetic strip 120 and send the signal for example to a local control unit 300. Typically, the local control unit 300 is present on the vehicle 2000 and, being the number of magnets fixed on the magnetic strip 120 known, it can count the pulses sent by the sensor 270 determining unequivocally the instantaneous position of the vehicle 2000 on the rail 110.

Advantageously, an initial position and an end position corresponding to a same magnet of the magnetic strip 120 and to each magnetic interaction of the electromagnetic group 220 with the established magnet (corresponding to a complete turn of the vehicle 200 along the closed path of the rail) is established, the counting of the local control unit 300 can be reset, reducing the possibility of counting errors.

In general, the local control unit 300 of the vehicle 2000 can be adapted to activate the electric actuator 150 and/or to communicate in a bidirectional way with a central control unit 400 of the system 4000 by means of radio and/or optical communications and/or in order to determine the instantaneous position of the vehicle 2000 on the rail 110. The central control unit 400 is typically adapted to determine the position in which to activate the actuation of the electric actuator 150 and to send a signal to the local control unit 300. With reference to Fig. 3, when the local control unit 300 receives communication from the central control unit 400 for actuating the electric actuator 150, the local control unit 300 closes the switch 350 and puts the supercapacitor 280 of the vehicle 2000 in electrical connection with electric actuator 150.

It should be noted that in Fig. 3 the movable part 200 has been divided into two subsystems: the electromagnetic group 220 and the subsystem 250 which comprises electrical/electronic circuitry and the supercapacitor 280. This subdivision was made to highlight the very frequent case in which the two subsystems are at a certain distance from one another, as shown for example in Fig. 2 and Fig. 4, and electrically connected to one another.

According to the exemplary embodiment of Fig. 1 the local control unit 300 of the vehicle 2000 can be electrically connected to an identical or similar local control unit 300 present on the other vehicles 3000. Advantageously, by means of the electrical connection between the control units 300, being the position of the vehicle 2000 and the (fixed) distance between the vehicle 2000 and a second vehicle 3000 or a third vehicle 3000 known, it is possible to further determine the position of a second vehicle 3000 or of a third vehicle 3000 on the rail 110 and activate the electric actuator 150 of the relative vehicle 3000.

## Claims

1. The system (1000) for transmitting electric energy to a vehicle (2000) over the air, said vehicle (2000) being adapted to perform a movement on a rail (110) by effect of a handling system (5000), in particular arranged along a closed path, the system (1000) comprising:
- a fixed part (100) bound to the ground and extending along at least part of said rail (110), and
- a movable part (200) bound to said vehicle (2000);
**characterized in that** by effect of said movement on said rail (110) said fixed part (100) induces an electromotive force in said movable part (200), and
**in that** electric energy deriving from said induced electromotive force is stored at least temporarily in said movable part (200).

2. The system (1000) according to claim 1, wherein said fixed part (100) comprises a magnetic strip (120) in which permanent magnets or electromagnets with alternating polarity alternate at a predetermined distance.

3. The system (1000) according to claim 1 or 2, wherein said movable part (200) comprises at least one electromagnetic group (220), said electromagnetic group (220) comprises at least one solenoid with magnetic core (221), preferably three pairs of solenoids with magnetic core (221...).

4. The system (1000) according to claim 1 or 2 or 3, wherein said movable part (200) comprises a supercapacitor or an electric accumulator (280) for storing said electric energy.

5. The system (1000) according to any one of the preceding claims, wherein said movable part (200) is periodically adapted to store energy for a first interval of time and to supply stored energy for a second interval of time, wherein said first interval of time is greater than said second interval of time.

6. The system (1000) according to any one of the preceding claims, comprising at least one sensor (270) adapted to determine the position of said vehicle on said rail (110).

7. The system (1000) according to claim 6, wherein said sensor (270) is part of said movable part (200) and is a magnetic sensor adapted to count a number of detected magnetic poles of said fixed part (100).

8. A vehicle (2000) adapted to receive electric energy while making a movement on a rail (110) by effect of a handling system (5000), said rail (110) being associated with a fixed part (100) adapted to create magnetic fields along at least part of the rail (110), **characterized in that** it comprises a movable part (200):
- adapted to allow induction of an electromotive force by effect of said movement on said rail (110), and
- adapted to at least temporarily store electric energy deriving from said induced electromotive force.

9. The vehicle (2000) according to claim 8, wherein said movable part (200) comprises at least one electromagnetic group (220), said electromagnetic group (220) comprising at least one solenoid with magnetic core (221), preferably three pairs of solenoids with magnetic core (221...).

10. The vehicle (2000) according to claim 8 or 9, wherein said movable part (200) comprises a supercapacitor (280) or an electric accumulator for storing said electric energy.

11. The vehicle (2000) according to claim 10, wherein said vehicle (2000) comprises an electric actuator (150), in particular a motor that controls a conveyor belt or an arm of a robot, adapted to consume electric energy and powered by said supercapacitor (280) or by said electric accumulator.

12. The vehicle (2000) according to any one of the preceding claims 8 to 11, wherein said movable part (200) is periodically adapted to store energy for a first interval of time and to supply stored energy for a second interval of time, wherein said first interval of time is preferably greater than said second interval of time.

13. The vehicle (2000) according to any one of the preceding claims 8 to 12, comprising at least one sensor (270) adapted to determine the position of said vehicle (2000) on said rail (110).

14. The vehicle (2000) according to claim 13, wherein said sensor (270) is part of said movable part (200) and is a magnetic sensor adapted to count a number of detected magnetic poles of said fixed part (100).

15. The vehicle (2000) according to any one of the preceding claims 8 to 14, **characterized in that** it comprises a fin (160) located in particular in its lower part, adapted to cooperate mechanically or magnetically with a handling system (5000).

16. The vehicle (2000) according to any one of the preceding claims 8 to 15, **characterized in that** it comprises means for mechanically and/or electrically connecting the vehicle (2000) with another vehicle.

17. The vehicle (2000) according to any one of the preceding claims 8 to 16, **characterized in that** it is a trolley adapted to transport articles.

18. The system (4000) for automatic handling of articles for industrial use comprising:
- a rail (110), in particular arranged along a closed path,
- one or more vehicles (2000) according to any one of the preceding claims 8 to 17, adapted to move on said rail (110),
- a handling system (5000) adapted to make said vehicles (2000) move on said rail (110), and
- an electric energy transmission system (1000) according to any one of the preceding claims 1 to 7, adapted to transmit electric energy to at least one of said vehicles (2000).
